# EUROPÄISCHE PATENTANMELDUNG

(11) **EP 2 433 740 A1**
(43) Veröffentlichungstag der Anmeldung: **28.03.2012**
(21) Anmeldenummer: 11179045.7
(22) Anmeldetag: 26.08.2011
(51) Int. Cl.: B23Q 1/00

(54) **Spannvorrichtung und Spannverfahren**

(30) Priorität: 24.09.2010 DE 102010046377
(71) Anmelder: Grob-Werke GmbH & Co. KG, 87719 Mindelheim (DE)
(72) Erfinder: Höbel, Alfred, 87493 Lauben (DE)
(74) Vertreter: Pfister, Stefan Helmut Ulrich

(57) **Zusammenfassung**

Die Erfindung betrifft eine Spannvorrichtung und ein Verfahren für das Spannen eines Gegenstandes, wobei ein mit dem Gegenstand verbundenes Spannmittel mit Spannelementen der Spannvorrichtung durch eine Spannbewegung zum lösbaren Festspannen des Gegenstandes zusammenwirkt und das zumindest eine Spannelement durch einen Spannantrieb entlang einer Spannrichtung bewegbar ist und zusätzlich das Spannelement in einer zur Spannrichtung verschiedenen Ausgleichsrichtung beweglich ist, um ein Zentrieren und anschließendes Festspannen des Gegenstandes zu erlauben.

## Beschreibung

Die Erfindung betrifft eine Spannvorrichtung für das mittelbare oder unmittelbare Spannen mindestens eines Gegenstandes wie zum Beispiel eines Werkstücks oder eines Werkzeuges, wobei ein mit dem Gegenstand mittelbar oder unmittelbar verbundenes Spannmittel mit einem oder mehreren Spannelementen der Spannvorrichtung durch eine Spannbewegung zum lösbaren Festspannen des Gegenstandes zusammenwirkt.

Des Weiteren umfasst die Erfindung auch ein Verfahren für das lösbare Festspannen eines Gegenstandes, zum Beispiel eines Werkstückes oder Werkzeuges mit einer Spannvorrichtung, wobei in einer Spannbewegung zumindest ein Spannelement der Spannvorrichtung derart durch einen Spannantrieb entlang einer Spannrichtung bewegt wird, dass das zumindest eine Spannelement mit einem mit dem Gegenstand mittelbar oder unmittelbar verbundenen Spannmittel zusammenwirkt.

Eingangs beschriebene Spannvorrichtungen sind im Bereich der Werkstückbearbeitung hinlänglich bekannt. Von einer gattungsgemäßen Spannvorrichtung wird erwartet, dass das Werkstück auch beim Einwirken der Bearbeitungskräfte absolut maßgenau gehalten wird. Daher haben gattungsgemäße Spannvorrichtungen nicht nur entsprechende Bearbeitungskräfte aufzunehmen, sondern dabei auch eine entsprechend hohe Genauigkeit bei dem Festspannen des Gegenstandes zu wahren. Gattungsgemäße Spannvorrichtungen werden zum Beispiel in Werkzeugmaschinen, Bearbeitungszentren, Bearbeitungsstationen oder ähnlichem eingesetzt. Eine hohe Reproduzierbarkeit der Spannparameter (Positionsgenauigkeit, Haltekräfte) ist hier für die Vermeidung von Fehlbearbeitungen oder Ausschuss von Bedeutung. Es sei hierbei erwähnt, dass sich die Erfindung nicht nur mit dem Spannen von Werkstücken beschäftigt, sondern der erfindungsgemäße Vorschlag auch grundsätzlich für das Spannen von beliebigen anderen Gegenständen verwendbar ist, zum Beispiel auch für Werkzeuge.

Insbesondere für das Festspannen von Werkstücken sind verschiedene Konzepte bekannt. Der Gegenstand, zum Beispiel das Werkstück, wird zum Beispiel unmittelbar durch die Spannvorrichtung gespannt, indem das Werkzeug selbst ein Spannmittel, zum Beispiel einen Spannbolzen oder ähnliches trägt. Es ist aber auch bekannt, den Gegenstand, zum Beispiel das Werkstück auf einer Palette zu montieren, wobei dann die Palette mit entsprechenden Spannmitteln ausgestattet ist und so eine mittelbare Verbindung des Gegenstandes mit der Spannvorrichtung erfolgt. All diese Lösungen gehören zu dem Feld der Erfindung.

Die gattungsgemäße Spannvorrichtung dient natürlich dazu, zumindest einen Gegenstand zu spannen, bei einer Anordnung mehrerer Gegenstände, zum Beispiel auf einer Palette, können mit der gattungsgemäßen Spannvorrichtung gleichzeitig auch mehrere Gegenstände gespannt werden.

Die Spannvorrichtung besitzt ein oder mehrere Spannelement(e), das/die in geeigneter Weise mit dem Spannmittel, welches mittelbar oder unmittelbar mit dem Gegenstand verbunden ist, zusammenwirkt/wirken und so ein lösbares Festspannen erreicht/- erreichen. Die Spannbewegung wird dabei von dem mindestens einen Spannelement ausgeführt, für die Spannbewegung ist ein entsprechender Spannantrieb vorgesehen.

Im Stand der Technik sind sogenannte Nullpunkt-Spannsysteme bekannt, wobei zum Beispiel ein Spannring an der den Gegenstand tragende Palette oder an dem Gegenstand selber angeordnet ist und die Spannvorrichtung einen kegel- oder konusartigen Einführdorn aufweist, der mit entsprechenden Anlageflächen des Spannringes zusammenwirkt. Zusätzlich sind Referenzflächen vorgesehen, auf denen der Spannring definitiv aufzuliegen hat, um so eine lagegenaue Positionierung des Gegenstandes relativ zur Spannvorrichtung sicherzustellen. Es konkurrieren bei dem Zusammenwirken des Spannringes, also dem Spannmittel, mit der Spannvorrichtung somit mehrere Flächen, und diese lagegemäße Überbestimmung ist insofern ungünstig. Die kegel- oder konusartige Ausgestaltung des Einführdornes muss möglichst exakt gefertigt werden, um eine hohe Reproduzierbarkeit der Anzugsund Haltekräfte zu gewährleisten. Dies führt zu einem entsprechenden Aufwand bei der Herstellung dieser gattungsgemäßen Spannvorrichtungen.

Des Weiteren sind im Stand der Technik Spannvorrichtungen bekannt, bei welchen ein zylindrisches Spannmittel mit einer Spannvorrichtung zusammenwirkt. Grundsätzlich ist eine solche Ausgestaltung nicht spielfrei, weil ansonsten ein Zusammenführen der beiden Elemente nicht möglich ist. Dieses Spiel muss aber hinterher mit entsprechendem Aufwand kompensiert werden.

Üblicherweise wird der Gegenstand (insbesondere das Werkstück) nicht nur mit einer Spannvorrichtung, sondern mit mehreren Spannvorrichtungen gehalten. Die zylinderartige Ausgestaltung bedingt eine exakte Einsetz- und Aushubbewegung des Gegenstandes auf die beziehungsweise von der Spannvorrichtung, um ein Verkanten beim Einsetzen oder Entfernen des Gegenstandes aus/- von der Spannvorrichtung zu vermeiden. Üblicherweise ist eine so hohe Genauigkeit bei der Einsetz- oder Entfernbewegung nicht vorgesehen, beziehungsweise mit entsprechendem Aufwand verbunden. Es besteht eine signifikante Gefahr eines Verkantes des Gegenstandes auf diesen Spannvorrichtungen mit der Folge, dass ungewollte Bearbeitungspausen entstehen oder aber höherer Aufwand für ein möglich exaktes Zu- und Abführen des Gegenstandes notwendig ist.

Die Erfindung hat es sich daher zur Aufgabe gemacht, die eingangs beschriebene Spannvorrichtung beziehungsweise das ebenfalls beschriebene Verfahren des lösbaren Festspannens eines Gegenstandes derart zu verbessern, dass zumindest einer der vorgenannten Nachteile überwunden wird.

Zur Lösung dieser erfindungsgemäßen Aufgabe schlägt die Erfindung eine Spannvorrichtung wie eingangs beschrieben vor, wobei das zumindest eine Spannelement durch einen Spannantrieb entlang einer Spannrichtung bewegbar ist und zusätzlich das zumindest eine Spannelement in einer zur Spannrichtung verschiedenen, bevorzugt rechtwinkligen Ausgleichsrichtung beweglich ist, um in einem ersten Abschnitt der Spannbewegung vor dem eigentlichen Festspannen ein Zentrieren des Gegenstandes beziehungsweise des Spannmittels relativ zur Spannvorrichtung beziehungsweise des zumindest einen Spannelementes in Richtung der Ausgleichsrichtung zu erlauben.

Das erfindungsgemäße Verfahren schlägt zur Lösung dieser Aufgabe vor, dass in einem ersten Teil der Spannbewegung sich das zumindest eine Spannelement in einer, zur Spannrichtung verschiedenen, insbesondere rechtwinkligen Ausgleichsrichtung, für ein Zentrieren des Gegenstandes beziehungsweise des Spannmittels relativ zur Spannvorrichtung beziehungsweise des zumindest einen Spannelementes bewegt, und in einem dem ersten Teil der Spannbewegung nachfolgenden zweiten Teil das Spannmittel durch das zumindest eine Spannelement, insbesondere durch eine Bewegung des zumindest einen Spannelementes in Spannrichtung, festgespannt wird.

Erfindungsgemäß erfolgt das Zentrieren des Gegenstandes beziehungsweise des Spannmittels relativ zur Spannvorrichtung beziehungsweise zu dem zumindest einen Spannelementes vor dem Spannen.

Hieraus ergibt sich eine Vielzahl von Vorteilen.

Die Gefahr eines Verkanten des Spannmittels beim Einführen des Spannmittels in die Spannvorrichtung wird vermieden, da ein ausreichendes Spiel vorsehbar ist, das dann zum Beispiel in dem Zentrierschritt eliminiert wird. Dabei ist zu beachten, dass die Lösungen nach dem Stand der Technik nur einen Festspannschritt kennen und dann im festgespannten Zustand ein Zentrieren naturgemäß nicht mehr möglich ist. Mögliche Ungenauigkeiten bei der Positionierung müssen dann durch entsprechende Maßnahmen kompensiert werden, wie zum Beispiel durch eine federnde Ausgestaltung des Konus' oder anderen kostenaufwändige Lösungen. Ein solches Vorgehen ist nach den Erfindungen nicht mehr notwendig.

Der erfindungsgemäße Vorschlag vermeidet auch eine lagemäßige Überbestimmung, da durch den erfindungsgemäßen Vorschlag die Anordnung einer einzigen verantwortlichen Referenzfläche für die lagegenaue Positionierung des Gegenstandes relativ zur Spannvorrichtung möglich ist. Eine aufwändige Bearbeitung des Spannmittels, welches nach dem Stand der Technik mit einem entsprechenden Konus ausgestattet ist, entfällt mit dem erfindungsgemäßen Vorschlag, die Reproduzierbarkeit des Spannprozesses ist sehr hoch, da keine Aufteilung der Spanngegenkräfte vorgesehen ist, wodurch die Bearbeitungsprozesse entsprechend sicher werden und die einzelnen Gegenstände sehr gleichartig, das heißt mit gleicher Genauigkeit und Haltekraft durch die erfindungsgemäße Spannvorrichtung, unter Einsatz des erfindungsgemäßen Spannverfahrens gespannt werden.

Der erfindungsgemäße Vorschlag erlaubt auch ein relativ großes Fangmaß und damit auch ein sicheres Ergreifen des Gegenstandes durch die Spannvorrichtung.

Zu bemerken ist, dass die erfindungsgemäße Spannvorrichtung zumindest ein Spannelement, üblicherweise aber eine Mehrzahl von Spannelementen, aufweist. All diese Lösungen gehören zur Erfindung.

Der erfindungsgemäße Vorschlag kompensiert ein mögliches Spiel beziehungsweise zentriert den Gegenstand relativ zur Spannvorrichtung, indem dem Spannelement eine zusätzliche Beweglichkeit zugeordnet wird. Üblicherweise dient der Spannantrieb dazu, in der Spannbewegung das Spannelement längs der Spannrichtung zu bewegen und so in lösbar fester Verbindung ein Spannen zu erreichen. Erfindungsgemäß besitzt aber nun das Spannelement auch eine zusätzliche Beweglichkeit in Ausgleichsrichtung, die von der Spannrichtung bevorzugt rechtwinklig, zumindest aber nicht mit dieser zusammenfallend orientiert ist. Diese freie Beweglichkeit oder dieser Freiheitsgrad wird genutzt, um das Zentrieren durchzuführen. Dadurch unterscheidet sich das Spannverfahren auch von den herkömmlich bekannten Verfahren, bei welchen ein Zentrieren, also ein Ausrichten, des Gegenstandes relativ zur Spannvorrichtung nicht vorgesehen ist und nach einem Festspannen eine entsprechende Lageveränderung nicht mehr möglich ist.

Erfindungsgemäß ist hierzu vorgesehen, dass eine freie Beweglichkeit des zumindest einen Spannelementes in Ausgleichsrichtung besteht. Die freie Beweglichkeit hier beträgt nur wenige 1/10 mm oder 1/100 mm. Diese Maße sind natürlich nicht beschränkend zu verstehen, sie können konstruktiv auch noch größer oder kleiner gewählt werden.

Der erfindungsgemäße Vorschlag sieht daher vor, dass das Spannelement nicht nur eine Bewegung in Spannrichtung, also zum Einbringen einer entsprechenden hohen Spannkraft zum Festhalten des Gegenstandes ausführt, sondern dass das Spannelement auch längs der Ausgleichsrichtung eine gewisse Beweglichkeit aufweist. Daher ist es günstig, dass keine starre Kopplung oder Verbindung des zumindest einen Spannelementes mit dem Spannantrieb besteht, da der Spannantrieb ja für die hauptsächliche Spannbewegung in Spannrichtung verantwortlich ist. Geschickterweise wird aber die Bewegung des Spannelementes in Ausgleichsrichtung von dem Spannantrieb abgeleitet und so der Spannantrieb mehrfach genutzt.

Als vorteilhaft wird angesehen, wenn die Spannvorrichtung derart ausgebildet ist, dass hier ein abschnittsweises Ein- beziehungsweise Angreifen des Spannelementes an dem Spannmittel erfolgt. Hieraus ergibt sich im Verlauf der Spannbewegung zunächst ein Zentrieren des Spannmittels durch das Spannelement und hernach in einem zweiten Abschnitt der Spannbewegung ein Festspannen des Gegenstandes durch die Spannvorrichtung beziehungsweise die Bewegung des Spannantriebes. Die beiden Abschnitte der Spannbewegung werden unter anderem definiert über den Angriff beziehungsweise Eingriff des Spannelementes am Spannmittel. Es handelt sich hierbei zwar um zwei getrennte Bewegungsabläufe, diese erfolgen jedoch kontinuierlich nacheinander. So geht das Zentrieren des Spannmittels durch die geführte Bewegung des Spannelementes über in das als zweiter Abschnitt der Spannbewegung zu verstehende Festspannen des Gegenstandes. Das Spannelement steht somit zunächst in eine Zentrierposition ein, um dann beispielsweise eine am Spannmittel vorgesehene Formgebung in einer kontinuierlichen Bewegung der Spannvorrichtung beziehungsweise der darin beweglich angeordneten Spannelemente und Spannelementhilfsmittel in eine Spannposition verbracht zu werden und das Spannmittel zu spannen.

Als günstig wird im Zusammenhang mit der zuvor beschriebenen Bewegung beziehungsweise Funktionsweise der erfindungsgemäßen Spannvorrichtung angesehen, wenn das Spannmittel eine entsprechende Formgebung aufweist und somit eine steuernde Funktion auf das mit dem Spannmittel in Eingriff stehende Spannelement ausübt. Das Spannmittel weist hierzu mindestens eine Ausnehmung, Hinterschneidung oder Einkerbung auf, die ein formschlüssiges Zusammenwirken mit dem mindestens einen Spannelement oder Teilen davon zulässt. Nach dem Einführen des Spannmittels in die Spannvorrichtung und bei Betätigung der Spannvorrichtung wird das Spannelement in eine entsprechende Ausnehmung, Hinterschneidung, Einkerbung oder dergleichen am Spannmittel eingebracht und rückt formschlüssig mit dieser zusammen. Hierdurch kommt es zunächst zu einer Zentrierung des Spannmittels in der Spannvorrichtung, vermittelt über das mit dem Spannmittel in Eingriff stehende beziehungsweise formschlüssig zusammenwirkende Spannelement. Durch weitergehende Betätigung der Spannvorrichtung wird, vermittelt über die entsprechende Formgebung der Ausnehmung, Hinterschneidung, Einkerbung oder dergleichen im Spannmittel eine Führung des Spannelementes bewirkt, die letztlich dazu führt, dass bei Abschluss der Spannbewegung das Festspannen des Spannmittels und des damit verbundenen Gegenstandes erfolgt. Hierzu bewirkt die Formgebung des Spannmittels ein Heranführen des Spannelementes an eine Anlageposition beim Festlegen beziehungsweise Festspannen des Spannmittels.

Um die Spannfunktion ausüben zu können, sieht eine bevorzugte Ausführungsform der Spannvorrichtung vor, dass hier eine Aufnahmeöffnung für die Aufnahme des Spannmittels vorhanden ist. In dieser Aufnahmeöffnung sind/ist dann die oder das Spannelement(e) angeordnet. Diese können in der Aufnahmeöffnung ringoder kranzartig angeordnet sein. Nach Einführen des Spannmittels in die Aufnahmeöffnung und nachfolgende Betätigung der Spannvorrichtung werden die Spannelemente radial in Richtung des Spannmittels bewegt und wirken mit diesem insbesondere formschlüssig zusammen, um die Zentrierung beziehungsweise das Spannen des Gegenstandes beziehungsweise daran angeordneten Spannmittels relativ zur Spannvorrichtung zu bewirken.

In einer gleichermaßen von der Erfindung umfassten weiteren bevorzugten Ausführungsform der Spannvorrichtung ist vorgesehen, dass die Spannvorrichtung einen Einführdorn aufweist, an dessen Mantelfläche die Spannelemente angeordnet sind. Dieser Einführdorn steht von einer Auflage für den Gegenstand ab, und greift in eine entsprechende Ausnehmung beziehungsweise Aufnahmeöffnung am Gegenstand beziehungsweise einer Aufnahme für den Gegenstand ein. Die Spannelemente, die dann mit dem in Form einer Aufnahmeöffnung am Gegenstand beziehungsweise der Auflage für den Gegenstand ausgeführten Spannmittel zusammenwirken sind hierbei ringartig am Einführdorn, beispielsweise an dessen Mantelfläche angeordnet. Die Spannmittel, beispielsweise ausgebildet als Aufnahmen weisen hierzu dann ein ring- oder ringnutartig ausgebildetes Spannmittel auf. Auch hier erfolgt dann zunächst durch einen Spannantrieb eine Bewegung des Spannelementes in einer zur eigentlichen Spannrichtung verschiedenen, bevorzugt rechtwinkligen Ausgleichsrichtung, um in einem ersten Abschnitt der Spannbewegung vor dem eigentlichen Festspannen ein Zentrieren des Gegenstandes beziehungsweise des Spannmittels relativ zur Spannvorrichtung durchzuführen, bevor dann ein Festspannen des Gegenstandes erfolgt. Im vorgenannten Fall muss das Spannmittel an dem Gegenstand nicht zwangsweise als Aufnahmeöffnung ausgebildet sein. Vielmehr besteht auch die Möglichkeit, dass hier Spannmittel vorgesehen sind, die nach Art einer Hülse ausgeformt sind, um die Spannvorrichtung mit den Spannelementen an einem Einführdorn zu übergreifen.

Insgesamt umfasst die Spannvorrichtung der vorliegenden Erfindung somit sowohl die Ausgestaltung der Spannvorrichtung, die zur Aufnahme eines Spannmittels ausgeführt ist, als auch die umgekehrte Lösung, wobei die Spannvorrichtung nach Art eines vorspringenden oder vorstehenden Elementes, beispielsweise als Einführdorn oder dergleichen ausgebildet ist und in eine entsprechende Aufnahme oder Aufnahmeöffnung am Gegenstand beziehungsweise der den Gegenstand tragenden Palette oder dergleichen eingreift. Diese Ausführungsform der erfindungsgemäßen Spannvorrichtung weist dann dieselbe Wirkungsweise auf, wie die insgesamt als Aufnahme ausgeführte Spannvorrichtung. Vorteil einer derartigen Ausführungsform ist es, dass hierbei keine Vertiefungen oder dergleichen an der Spannvorrichtung auftreten, in denen sich Verschmutzungen, Späne oder dergleichen ansammeln können, die dann die Funktionsweise der Spannvorrichtung beeinträchtigen. Auch gestaltet sich die Ausführung einer entsprechenden Aufnahme am Gegegenstand beziehungsweise einem den Gegenstand aufnehmenden gesonderten Maschinenelementes als besonders einfach, da hier lediglich eine entsprechend ausgeformte Bohrung angeordnet werden muss. Diese kann mit entsprechender Präzision ausgeführt werden und ist wesentlich weniger anfällig für Beschädigungen oder Verschleiß als ein von dem Gegenstand beziehungsweise der Aufnahme für den Gegenstand vorspringender Bolzen oder ein in sonstiger Art und Weise ausgeformtes Spannmittel.

Bei dem Gegenstand kann es sich, wie zuvor bereits mehrfach ausgeführt zum einen um ein zu bearbeitendes Werkstück handeln, das mit entsprechenden Spannmitteln, seien es Spannbolzen oder Ausnehmungen zum Eingriff mit der Spannvorrichtung, ausgestattet ist, zum anderen kann die erfindungsgemäße Spannvorrichtung auch zum Spannen von Werkzeugen verwendet werden. Daneben besteht selbstverständlich auch die Möglichkeit, dass hier über die Spannvorrichtung eine Palette oder dergleichen auf einer Werkzeugmaschine aufgespannt wird, die dann wiederum als Aufnahmen für zu bearbeitende Werkstücke dient.

In einer als günstig angesehenen Ausführungsform der Spannvorrichtung weist diese eine Aufnahmeöffnung für die Aufnahme des Spannmittels auf. Um das Eindringen von Spänen oder sonstigen Verschmutzungen, Staub oder Kühl- beziehungsweise Schmierflüssigkeit zu verhindern, wenn eine oder mehrere Spannvorrichtungen nicht für die Aufnahme von Spannmitteln verwendet werden, ist erfindungsgemäß vorgesehen, dass eine Verschlusskappe die Aufnahmeöffnung verschließt. Diese Verschlusskappe wird bevorzugt gegen die Kraft einer Feder insbesondere durch das Spannmittel, das in die Aufnahmeöffnung eingeführt wird, in die Aufnahmeöffnung eingedrückt und gibt somit die Aufnahmeöffnung frei. Wird das Spannmittel aus der Aufnahmeöffnung entfernt, bewirkt die Rückstellkraft der Feder, dass die Verschlusskappe innerhalb der Aufnahmeöffnung zu einer Verschlussposition verschoben wird und die Aufnahmeöffnung dicht abschließt. Hierfür kann die Verschlusskappe zusätzliche Dichtelemente aufweisen, die entlang der Wandung der Aufnahmeöffnung gleiten und hernach einen oberseitigen Abschluss der Aufnahmeöffnung weiter verbessern.

Die Erfindung umfasst sowohl Ausführungsformen der Spannvorrichtung zur Aufnahme eines Spannelementes wie auch entsprechend gegensinnig ausgebildete Spannvorrichtungen, die als vorspringender oder vorstehender Dorn oder dergleichen ausgeführt sind und die in eine Ausnehmung oder Aufnahmeöffnung am Gegenstand eingeführt werden. Die Spannmittel, die in einer entsprechenden Spannvorrichtung vorgesehen sind, sind daher bevorzugt als Spannbolzen zum Einführen in eine Aufnahmeöffnung oder als Spannring oder Spannbuchse oder Hülse zum Aufnehmen einer als Einführdorn ausgebildeten Spannvorrichtung ausgeführt. In jedem Fall weisen die Spannmittel eine Formgebung auf, die die erfindungsgemäße Spannbewegung, das heißt die Führung und Bewegung der Spannelemente zulassen und steuern können.

Der der Spannvorrichtung zugeordnete Spannantrieb kann eine Vielzahl möglicher Ausführungsformen aufweisen. So kann dieser Spannantrieb elektromotorisch, elektromechanisch, pneumatisch, mechanisch oder hydraulisch wirkend ausgebildet sein. Gleichzeitig besteht die Möglichkeit, hier mehrere entsprechende Antriebsformen zu kombinieren, um die einzelnen Bewegungsabläufe innerhalb der Spannvorrichtung zu koordinieren. Ist beispielsweise ein mechanischer Spannantrieb beispielsweise aufgrund einer Feder oder eines Federpaketes vorgesehen, kann diese Feder dann beispielsweise durch eine entsprechend angeordnete Hydraulik wieder entspannt werden, um das Spannmittel freizugeben. Der der erfindungsgemäßen Spannvorrichtung in einer bevorzugten Ausführungsform zugeordnete Spannantrieb umfasst bevorzugt eine Zughülse oder einen Zugbolzen. Dieser wird von dem Spannantrieb bewegt und wirkt dabei, aufgrund seiner Konfiguration auf das Spannelement ein und bewegt dieses. Dabei erweist es sich als vorteilhaft, wenn die Zughülse beziehungsweise der Zugbolzen das zumindest eine Spannelement käfigartig hält. Die Zughülse oder der Zugbolzen sind über dem Spannantrieb in Spannrichtung bewegbar, wobei die Zughülse beziehungsweise der Zugbolzen dann so ausgebildet sind, dass eine Beweglichkeit des wenigstens einen Spannelementes in Ausgleichsrichtung möglich ist. Das Spannelement ist somit beweglich, wenigstens in den oben bereits genannten Grenzen in der Zughülse beziehungsweise dem Zugbolzen angeordnet und dadurch kann somit über das, beispielsweise durch das Spannmittel oder dergleichen, vorgegebene Profil bewegt werden, um zum einen eine Zentrierfunktion und zum anderen eine Spannfunktion zu übernehmen, die in nacheinander ablaufenden Abschnitten der Spannbewegung in der erfindungsgemäßen Spannvorrichtung vorgesehen sind.

In der Spannvorrichtung übernimmt das hier vorgesehene Spannelement, wie bereits ausgeführt, eine Doppelfunktion. Zunächst wird über das Spannelement eine Zentrierung des mit der Spannvorrichtung zusammenwirkenden Spannmittels durchgeführt, um dann im Zuge einer Spannbewegung zum lösbaren Festspannen des Gegenstandes mit diesem zusammenzuwirken. Das Spannelement ist hierbei erfindungsgemäß als Spannkugel oder Spannbacke ausgebildet. Denkbar sind jedoch alle weiteren, möglichen und als geeignet erscheinenden Ausformungen des Spannelementes, wobei die vorliegende Erfindung sämtliche derartigen Spannelemente umfasst beziehungsweise einschließt. Das Spannelement kann beispielsweise auch als beweglicher Bolzen oder Stift sowie als Zylinder, Walze, Kegel oder dergleichen ausgebildet werden, um mit dem Spannmittel, beispielsweise einem Spannbolzen oder einem Spannring zusammenzuwirken.

Die erfindungsgemäße Spannvorrichtung sieht auch vor, mehrere Spannelementarten, die unterschiedlich ausgebildet sein können, in ein und derselben Spannvorrichtung anzuordnen. Hierbei kann das entsprechende Spannelement je nach vorgesehener Funktion in der erfindungsgemäßen Spannvorrichtung ausgewählt werden. So kann beispielsweise ein kugelartig ausgebildetes Spannelement verwendet werden, um eine Zentrierung des Spannmittels durchzuführen, während hernach dieses erste Spannelement abgelöst oder ergänzt wird durch ein weiteres Spannelement anderer Ausführung, beispielsweise eine Spannbacke oder dergleichen, um letztendlich ein Spannen des Spannmittels, beziehungsweise des Gegenstandes in oder an der Spannvorrichtung durchzuführen. Das Spannelement ist somit auch zwei- oder mehrteilig ausgebildet in der Spannvorrichtung gemäß der vorliegenden Erfindung verwendbar. Diese Ausgestaltung wird gleichermaßen von der Erfindung umfasst. In jedem Fall wird durch die entsprechende Ausführung der Spannvorrichtung auch mit zwei oder mehreren gegebenenfalls unterschiedlich ausgebildeten Spannelementen die erfindungsgemäße Aufgabe gelöst und der Aufbau einer Spannvorrichtung wesentlich verbessert. In jedem Fall wirkt ein mit dem Gegenstand mittelbar oder unmittelbar verbundenes Spannmittel mit einem oder mehreren der gegebenenfalls unterschiedlich ausgeführten Spannelementen der Spannvorrichtung durch eine Spannbewegung zum lösbaren Festspannen des Gegenstandes zusammen. Hierbei wird das zumindest in einer ersten Ausführungsform vorliegende Spannelement durch einen Spannantrieb entlang einer Spannrichtung bewegt und zusätzlich ein weiteres, gegebenenfalls von dem vorhergehenden abweichend ausgeführte Spannelement in einer zur Spannrichtung verschiedenen bevorzugt rechtwinkligen Ausgleichsrichtung zentriert. Das in der Spannvorrichtung vorgesehene Spannelement ist somit nicht als ein einziges Element anzusehen, sondern versteht sich als funktionelles Bauteil der Spannvorrichtung mit gegebenenfalls unterschiedliche Konfigurationen aufweisenden Einzelelementen, die sich zu dem Spannelement der Spannvorrichtung ergänzen.

In einer als günstig angesehenen Ausführungsform der Spannvorrichtung ist ein Abstützelement auf der der Aufnahmeöffnung abgewandten Seite des zumindest einen Spannelementes vorgesehen. Das Abstützelement umgibt insbesondere die ring- oder kranzartig angeordneten Spannelemente beispielsweise nach Art einer Hülse. Das oder die Spannelemente stützen sich während eines Teil der Spannbewegung an dem Abstützelement ab, das eine Ausgestaltung aufweist, durch welche das Spannelement bei seiner Bewegung in Spannrichtung auch in Ausgleichsrichtung auf das Spannmittel zu versetzt wird. Das Abstützelement stellt somit eine Führung für das Spannelement zur Verfügung, und bewirkt somit teilweise die Funktionsweise der erfindungsgemäßen Spannvorrichtung. Die Führung an dem Abstützelement, die beispielsweise in Form eines Vorsprungs oder einer Schulter ausgebildet ist, bewirkt bei Bewegung des Spannelementes, beispielsweise durch Verschieben der Zughülse beziehungsweise des Zugbolzens, eine Radialbewegung des Spannelementes auf das Spannmittel zu und rückt das Spannelement somit in eine am Spannmittel vorgesehene Ausnehmung, Hinterschneidung, Einkerbung oder dergleichen ein, um hierdurch eine Zentrierung des Spannmittels in einem ersten Abschnitt der Spannbewegung durchzuführen. Im weiteren Verlauf führt das Abstützelement das Spannelement entsprechend weiter, insbesondere innerhalb der durch das Spannmittel vorgegebenen Form der Ausnehmung oder dergleichen, um letztendlich den zweiten Abschnitt der Spannbewegung zu ermöglichen, in dem das Festspannen des Spannmittels beziehungsweise des Gegenstandes in der Spannvorrichtung erfolgt, wobei sich das Spannelement zusätzlich am Spannmittel abstützt und dieses spannt.

Die erfindungsgemäße Spannvorrichtung sieht in einer bevorzugten Ausführungsform vor, dass das Abstützelement im wesentlichen hülsenartig ausgestaltet ist. Das Spannelement stützt sich dabei in Abhängigkeit von der jeweiligen Konfiguration der erfindungsgemäßen Spannvorrichtung auf der Hülseninnenfläche des Abstützelementes oder auf dessen Außenfläche ab. Die Hülseninnenfläche beziehungsweise -außenfläche weist hierbei einen Absatz oder Konus auf, der nach Art einer Schulter oder dergleichen ausgebildet ist, durch welchen das zumindest eine Spannelement bei seiner Bewegung in Spannrichtung zunächst in Ausgleichsrichtung auf das Spannmittel zu versetzt wird. Durch die Schulter beziehungsweise den Konus erfolgt eine Führung des Spannelementes. Dieses wird durch die jeweilige Ausführungsform des Abstützelementes entweder in eine, beispielsweise im Spannmittel vorgesehene Ausnehmung eingeführt, beziehungsweise in ein ringförmig ausgeführtes Spannmittel, in das eine beispielsweise als Bolzen oder dergleichen ausgeführte Spannvorrichtung einsteht, in die dort vorgesehenen ringartigen Spannmittel eingeführt, um eine Zentrierung zu bewirken. Im weiteren Verlauf weist das Abstützelement dann einen verringerten Hülseninnendurchmesser beziehungsweise einen vergrößerten Hülsenaußendurchmesser auf, wodurch dann das Spannelement bei seiner Bewegung in Spannrichtung in der entsprechend vorher definierten Position gehalten wird, so dass das Spannmittel während der gesamten Bewegung zentriert bleibt. Da die erfindungsgemäße Spannvorrichtung beide vorgenannten Alternativen der Ausführung umfasst, legt die jeweils gewählte Ausführungsform auch die Formgebung und Anordnung des Abstützelementes fest.

Eine bevorzugte Ausführungsform der Spannvorrichtung umgeht die Nachteile des vorgenannten Standes der Technik, bezüglich einer flächenmäßigen Überbestimmung dadurch, dass im Bereich des Zusammenwirkens des zumindest einen Spannelementes mit dem Spannmittel keine Referenzflächen für die lagegenaue Positionierung des Gegenstandes relativ zur Spannvorrichtung vorgesehen werden müssen, um dennoch zu einer lagegenauen Positionierung sowie anschließenden Verspannung des Gegenstandes zu gelangen. Die erfindungsgemäße Spannvorrichtung erlaubt somit einen wesentlich einfacheren Aufbau bei Erzielung eines verbesserten technischen Effektes. Die Spannvorrichtung gemäß der vorliegenden Erfindung vereint somit die Funktion einer Zentrierung des Gegenstandes mit dem Festspannen in einem einzigen Arbeitsgang beziehungsweise einem einzigen Vorrichtungselement.

Die Erfindung umfasst auch ein Verfahren für das lösbare Festspannen eines Gegenstandes, zum Beispiel eines Werkstücks oder Werkzeuges mit einer Spannvorrichtung. Die Spannvorrichtung ist dabei insbesondere wie vor beschrieben ausgeführt. Im erfindungsgemäßen Verfahren ist vorgesehen, dass in einer Spannbewegung zumindest ein Spannelement der Spannvorrichtung durch einen Spannantrieb entlang einer Spannrichtung derart bewegt wird, dass das zumindest eine Spannelement mit einem, mit dem Gegenstand mittelbar oder unmittelbar verbundenen Spannmittel zusammenwirkt. Das erfindungsgemäße Verfahren zeichnet sich dabei dadurch aus, dass in einem ersten Teil der Spannbewegung sich das zumindest eine Spannelement in einer zur Spannrichtung verschiedenen, insbesondere rechtwinkligen Ausgleichsrichtung bewegt, um hierdurch ein Zentrieren des Gegenstandes beziehungsweise des Spannmittels relativ zur Spannvorrichtung durchzuführen, wonach in einem dem ersten nachfolgenden zweiten Teil der Spannbewegung das Spannmittel durch das zumindest eine Spannelement insbesondere durch eine Bewegung des zumindest einen Spannelementes in Spannrichtung festgespannt wird. Hierbei wird im ersten Teil der Spannbewegung das Spannelement bevorzugt mit dem Spannmittel formschlüssig in Eingriff gebracht und bewirkt im Zuge des formschlüssigen Zusammenwirkens von Spannelement und Spannmittel im Zuge der Spannbewegung in Spannrichtung das Festspannen des Gegenstandes. Im erfindungsgemäßen Verfahren ist vorgesehen, dass vor dem ersten Teil der Spannbewegung das zumindest eine Spannelement in Spannrichtung bewegt wird. Im Zuge dieser Bewegung in Spannrichtung erfolgt dann, aufgrund der vorgenannten Ausführungsform der im erfindungsgemäßen Verfahren insbesondere verwendeten Spannvorrichtung ein gleichzeitiges Bewegen des Spannelementes in einer zur Spannrichtung verschiedenen Ausgleichsrichtung. Die im erfindungsgemäßen Verfahren vorgesehene Bewegung ist fließend, das heißt die Bewegung des Spannelementes in die Ausgleichsrichtung geht in eine Bewegung in Spannrichtung über.

Das erfindungsgemäße Verfahren umfasst dabei bezüglich der Ausgleichsrichtung gleichermaßen eine radiale Bewegung des Spannelementes auf das Zentrum der Spannvorrichtung hin, wie auch von diesem weg. Die Bewegung des Spannelementes ist hierbei abhängig von der jeweiligen Ausgestaltung der mit der im erfindungsgemäßen Verfahren eingesetzten Spannvorrichtung beziehungsweise der Position und Ausformung der Spannmittel.

Die Erfindung umfasst gleichermaßen eine Bearbeitungsmaschine, welche zum Spannen mindestens eines Gegenstandes eine oder mehrere wie vor beschrieben ausgeführte Spannvorrichtung(en) aufweist. Ohne die Erfindung hierauf zu beschränken, kann es sich bei der Bearbeitungsmaschine beispielsweise um eine spanabhebende Bearbeitungsmaschine, ein Bearbeitungszentrum oder die Bearbeitungsstation einer Bearbeitungslinie oder Bearbeitungsstraße handeln. Hierbei kann selbstverständlich auch die Anordnung mehrerer entsprechender Spannvorrichtungen an einzelnen Positionen des Bearbeitungszentrums oder einzelnen Bearbeitungsstationen einer Bearbeitungslinie beziehungsweise einer Bearbeitungsstraße vorgesehen werden. Alle vorgenannten Ausführungsformen der Bearbeitungsmaschine sind von der vorliegenden Erfindung umfasst. Neben der Verwendung der erfindungsgemäßen Spannvorrichtung in einer wie zuvor beschriebenen Bearbeitungsmaschine kann selbstverständlich auch ein für die Aufnahme von zu bearbeitenden Gegenständen ausgeführtes Aufnahmeelement, beispielsweise eine Palette oder ein Auflagetisch mit der erfindungsgemäßen Spannvorrichtung ausgestattet werden. Die Anordnung der Spannvorrichtung in einer ein Werkzeug aufnehmenden Spindel oder dergleichen ist hierbei ebenfalls vorgesehen. Aufgrund dessen, dass die Spannvorrichtung ein positionsgenaues Zentrieren und anschließendes Festspannen eines Gegenstandes erlaubt, eignet sich die Spannvorrichtung beispielsweise auch zur Verwendung in der Werkzeughalterung einer Drehmaschine oder dergleichen, die mit einem feststehenden spanabhebenden Werkzeug arbeitet, das gegen ein rotierendes Werkzeug angestellt wird. Die Vorteile der lagegenauen Positionierung des Werkzeuges und die über die Spannvorrichtung erreichbaren Spannkräfte sprechen für die Eignung der Spannvorrichtung für die geschilderten Verwendungszwecke.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigen:

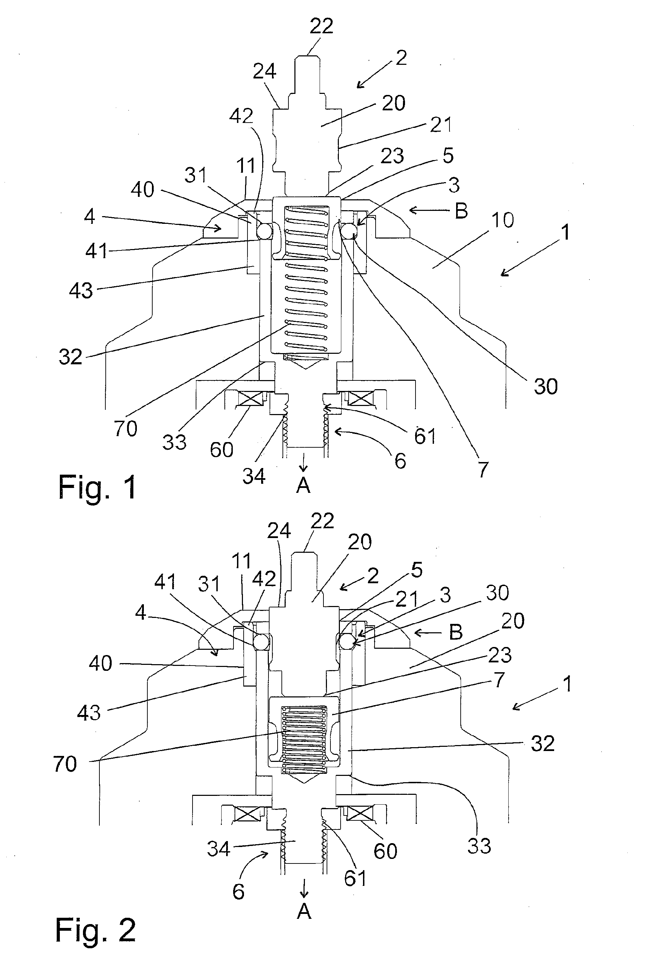

- Fig. 1 bis 4: eine bevorzugte Ausführungsform der erfindungsgemäßen Spannvorrichtung in verschiedenen Spannbeziehungsweise Zentrierpositionen, jeweils in seitlicher Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

Figur 1 zeigt eine bevorzugte Ausführungsform der erfindungsgemäßen Spannvorrichtung 1. Diese umfasst ein Spannelement 3 sowie einen Spannantrieb 6. Der Spannvorrichtung 1 zugeordnet ist ein Spannmittel 2, das beispielsweise an einem Gegenstand, wie zum Beispiel einem Werkzeug, einem Werkstück, einer Palette oder einem Aufnahmetisch für einen Gegenstand oder ein Werkstück angeordnet sein kann und dazu dient, mit der Spannvorrichtung 1 in Eingriff gebracht, den Gegenstand zur Bearbeitung zu spannen. Die Spannvorrichtung 1 selbst weist einen Grundkörper 10 auf, der beispielsweise auf einem Maschinentisch (nicht dargestellt) angeordnet sein kann und in seinem Inneren die Spannvorrichtung 1 aufweist. Der Grundkörper 10 stellt zudem die Aufnahme für den Spannantrieb 6 zur Verfügung. Im Grundkörper 10 angeordnet befindet sich auch die Aufnahmeöffnung 5, über die das Spannmittel 2 in die Spannvorrichtung 1 eingeführt werden kann. In der Aufnahmeöffnung 5 befinden sich sämtliche Bestandteile der Spannvorrichtung 1. Hierzu zählen beispielsweise das Abstützelement 4, das Spannelement 3 und der Spannantrieb 6. Die Aufnahmeöffnung 5 wird abgeschlossen durch eine Abdeckkappe 7, die innerhalb der Aufnahmeöffnung 5 beziehungsweise der Spannvorrichtung 1 gegen die Kraft einer Feder 70 verschoben werden kann. Im unbenutzten Zustand der Spannvorrichtung 1, das heißt ohne aufgenommenes Spannmittel 2 schließt die Abdeckkappe 7 die Aufnahmeöffnung 5 dicht ab.

In Fig. 1 ist das Spannmittel 2 vor dem Einführen in die Aufnahmeöffnung 5 dargestellt. Das Spannmittel 2 liegt dabei auf der Abdeckkappe 7 auf. Gegebenenfalls kann die Abdeckkappe 7 entsprechende Markierungen aufweisen, um bereits hier eine Vorzentrierung des Spannmittels 2 durchführen zu können. Beim Einführen des Spannmittels 2 in die Aufnahmeöffnung 5 wird die Feder 70 komprimiert durch die Abdeckkappe 7, die in der Aufnahmeöffnung 5 verschoben wird. Die Feder 70 ist in den Fig. 2, 3 und 4 im komprimierten Zustand dargestellt. Nach der Entnahme des Spannmittels 2 wird über die Rückstellkraft der Feder 70 die Abdeckkappe 7 wieder in ihre Verschlussposition in der Spannvorrichtung 1 zurückgeführt und verschließt die Aufnahmeöffnung 5, so dass das Eindringen von Schmutz oder dergleichen verhindert wird. Der Abdeckkappe 7, beziehungsweise der Aufnahmeöffnung 5 kann eine in den Figuren 1 bis 4 nicht dargestellt Ausblasvorrichtung zugeordnet sein, die entsprechendes Material, wie beispielsweise Späne, Stäube oder auch im Laufe der Bearbeitung von Werkstücken verwendete Schmier- oder Kühlmittel aus der Spannvorrichtung 1 ausbläst und hier eine übermäßige Verschmutzung verhindert.

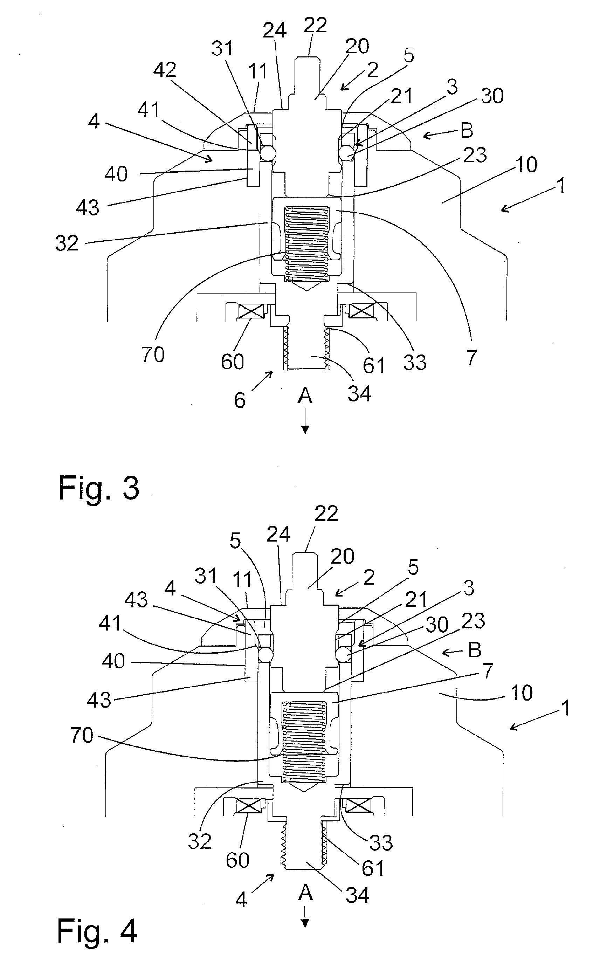

Die Spannvorrichtung 1 wie in den Figuren 1 bis 4 dargestellt umfasst des Weiteren ein Spannelement 3. Dieses ist in den dargestellten Ausführungsbeispielen als Kugel 30 ausgeführt. Bei der Betätigung der Spannvorrichtung übernimmt dieses Spannelement 3 eine Doppelfunktion. Zum Einen wird durch das Spannelement 3 eine Zentrierung des Spannmittels 2 bewirkt, zum Anderen vermittelt das Spannelement 3 das Spannen des Spannmittels 2 in der Spannvorrichtung 1. Im Spannvorgang führt das Spannelement 3 insgesamt zwei Bewegungen mit unterschiedlichen Richtungen aus. Zunächst wird, nach Einsetzen des Spannmittels 2 in die Spannvorrichtung 1 und Initiierung des Spannvorganges das Spannmittel 2 in einer verschiedenen, bevorzugt rechtwinklig zur Spannrichtung (A) Ausgleichsrichtung (B) bewegt. Diese Bewegung bewirkt, wie im Ausführungsbeispiel der Figuren 2 und 3 dargestellt, dass die Kugel 30 in eine am Spannmittel 2 vorgesehene Ausnehmung 21 formschlüssig eingreift. Im Verlauf dieses Eingreifens erfolgt eine Zentrierung des Spannmittels 2 in der Aufnahmeöffnung 5. Es wird somit eine lagegenaue Positionierung des Spannmittels 2 bereits kurz nach dem Einführen in die Aufnahmeöffnung 5 und der Inbetriebnahme der Spannvorrichtung 1 durchgeführt. Um in die Ausnehmung 21 eingreifen zu können, ist die Kugel 30 beweglich gelagert. Als Lager für die Kugel dient ein Käfig 31, der in einer in der Spannvorrichtung 1 ebenfalls vorgesehenen Zughülse 32 vorgesehen ist und als Halterung für die Kugel 30 dient. Die Zughülse 32 stellt an ihrem Hülsenboden 33 zum Einen eine Aufnahme für die Feder 70 zur Verfügung. Die Feder 70 wird somit bei der Verschiebung der Abdeckkappe 7 gegen den Hülsenboden 33 beaufschlagt. An der gegenüberliegenden Seite des Hülsenbodens 33 weist dieser einen Gewindebolzen 34 auf, der mit dem Spannantrieb 6 zusammenwirkt und über den eine Verschiebung der Zughülse 32 in Spannrichtung (Pfeil A) erfolgt. Im Zuge dieser Verschiebung der Zughülse 32 wird die Bewegung des Spannelementes 3, im Ausführungsbeispiel der Kugel 30, durchgeführt. Die in dem an der Zughülse 32 angeordneten Käfig 31 aufgenommene Kugel 30 wird, durch die Bewegung der Zughülse 32 entlang der Innenfläche der Hülse 40 geführt. Die Innenfläche der Hülse 40 weist einen oberen Hülsenabschnitt 42 und einen unteren Hülsenabschnitt 43 auf. Der obere Hülsenabschnitt 42 verfügt im Vergleich zum unteren Hülsenabschnitt 43 über eine reduzierte Wandstärke. Auf Grund dessen bildet sich in der Hülse 40 ein Absatz 41 aus, der als Führung für die Kugel 30 dient. Die Kugel 30 gleitet im Zuge der Verschiebung der Zughülse 32 an der inneren Oberfläche der Hülse 40 entlang und wird durch den vorspringenden Absatz 41 in Richtung des Spannmittels 2, das im Ausführungsbeispiel als Spannbolzen 20 ausgeführt ist in eine Ausgleichsrichtung (B), die unterschiedlich ist zur Spannrichtung (A) auf den Spannbolzen 20 hin verschoben und in die im Spannbolzen 20 vorgesehene Ausnehmung 21 eingedrückt, so dass hier ein formschlüssiger Eingriff stattfindet. Durch weiteres Verschieben der Zughülse in Spannrichtung (A) wird die Kugel 30 in der Ausnehmung 21 in Spannrichtung (A) verschoben und bis zum unteren Ende der Ausnehmung 21 verschoben. Durch weiteres Verschieben der Zughülse 32 erfolgt dann ein Spannen des Spannbolzens 20 in der Spannvorrichtung 1.

Die Spannvorrichtung 1 wird an ihrem oberen Ende abgeschlossen von einem Deckel 11. Dieser stützt sich auf dem Grundkörper 10 ab und schließt die in dem Grundkörper 10 angeordnete Spannvorrichtung ab. Im Deckel 11 befindet sich eine Ausnehmung, die der Aufnahmeöffnung 5 entspricht. Ist ein Spannmittel 2 in der Spannvorrichtung 1 eingesetzt und gespannt, so schließt dessen Zwischenfläche 24 bündig mit dem Deckel 11 ab. Das untere Ende 23 des Spannmittels 2 liegt dabei auf der Abdeckkappe 7 auf, während am oberen Ende 22 eine Verbindung des Spannmittels 2 mit einem Gegenstand möglich ist. Das obere Ende 22 des Spannmittels 2 ist in den Abbildungen nur schematisch dargestellt. Hier können beispielsweise Gewinde oder dergleichen zur Befestigung des Spannbolzens 20 an den Gegenstand angeordnet werden.

Im dargestellten Ausführungsbeispiel wird als Spannantrieb 6 ein Elektromotor verwendet, der die Verschiebebewegung der Zughülse 32 bewirkt. Der Spannantrieb 6 ist gegenüber dem Grundkörper 10 und der darin angeordneten Spannvorrichtung 1 drehbar unterhalb der Spannvorrichtung 1 gelagert. Hierzu sind entsprechende Lager 60 angeordnet. Das an dem Gewindebolzen 34 vorgesehene Gewinde 61 greift in den Spannantrieb 6 ein, so dass abhängig von der Drehrichtung des Spannatriebes 6 eine Verschiebung der Zughülse 32 in Spannrichtung (A) oder entgegen dieser Richtung erfolgt, um ein Spannen oder Lösen des Spannmittels 2 aus der oder in der Spannvorrichtung 1 durchzuführen.

In den Figuren 1 bis 4 ist lediglich eine mögliche Ausführungsform der erfindungsgemäßen Spannvorrichtung dargestellt. Diese weist eine Aufnahmeöffnung 5 für die Aufnahme eines Spannmittels 2 auf, wobei die Elemente der Spannvorichtung 1 im Innern der Aufnahmeöffnung 5 angeordnet sind, um mit dem Spannmittel 2, angetrieben über den Spannantrieb 6 zusammenzuwirken. Neben der hier gezeigten Ausführungsform besteht selbstverständlich auch die Möglichkeit, dass das Spannmittel 2 beispielsweise als Hülse ausgebildet ist. Die Spannvorrichtung 1 weist dann einen genau umgekehrten Aufbau auf, das heißt, das Spannelement 3 bewegt sich vermittelt durch die Zughülse 32 und geführt durch den Absatz 41 in der Hülse 40 nicht radial zum Zentrum der Aufnahmeöffnung 5 hin, sondern in radialer Richtung von diesem Zentrum weg, um mit einer entsprechenden Ausnehmung, die in der dann das Spannmittel 2 bildenden Hülse vorgesehen ist, in Eingriff gebracht zu werden und eine Zentrierung durchzuführen.

Neben der zuvor geschilderten Ausführungsform der Spannvorrichtung besteht selbstverständlich auch die Möglichkeit, dass sämtliche Elemente der Spannvorrichtung 1 an einem nicht dargestellten Einführdorn angeordnet sind, der dann in eine am Gegenstand beziehungsweise einer Palette oder einer sonstigen Aufnahme, beispielsweise für ein Werkstück oder ein Werkzeug eingeführt wird. Die Funktionsweise der Spannvorrichtung 1 bleibt dabei gleich. Es wirkt auch hier ein mit dem Gegenstand mittelbar oder unmittelbar verbundenes Spannmittel 2, beispielsweise ein in dem Gegenstand vorgesehener Spannring oder dergleichen mit einem oder mehreren Spannelementen 3, beispielsweise Kugeln, Bolzen, Zapfen, Walzen oder Zylindern der Spannvorrichtung 1 durch eine Spannbewegung zum lösbaren Festspannen des Gegenstandes zusammen. Das zumindest eine Spannelement 3 ist dabei durch einen Spannantrieb 6 entlang einer Spannrichtung (A) bewegbar und zusätzlich in einer zur Spannrichtung (A) verschiedenen, bevorzugt rechtwinkligen Ausgleichsrichtung (B) beweglich. Die Bewegung führt in diesem Falle das Spannelement 3 vom Zentrum der Spannvorrichtung 1 radial weg und drückt dieses in eine an dem Spannmittel 2 vorgesehene Ausnehmung, Ringnut oder dergleichen. In einem ersten Abschnitt der Spannbewegung, das heißt vor dem eigentlichen Festspannen erfolgt über diese radiale Bewegung des Spannelementes 3 ein Zentrieren des Gegenstandes beziehungsweise des Spannmittels 2 relativ zur Spannvorrichtung 1. Im weiteren Verlauf der Spannbewegung wird dann das Spannmittel 2, das heißt der Gegenstand, mit der Spannvorrichtung 1 verspannt, die im Zuge der weitergeführten Spannbewegung tiefer in die Aufnahmeöffnung 5 am Gegenstand eingetaucht und letztendlich Spannvorrichtung 1 und Gegenstand mit einander verspannt. Die Erfindung umfasst somit Spannvorrichtungen 1 zur Aufnahme von Spannmitteln 2 ebenso wie Spannvorrichtungen 1 zum Einführen in einen zu spannenden Gegenstand, der dann die Spannmittel 2 zur Verfügung stellt und mit den Spannelementen 3 der Spannvorrichtung 1 zusammenwirkt.

In den Figuren 1 bis 4 wird schematisch ein Spannantrieb 6 in Form eines elektromotorischen Antriebes dargestellt. Daneben besteht selbstverständlich auch die Möglichkeit, diesen Spannantrieb 6 pneumatisch, elektromechanisch, mechanisch, zum Beispiel auf Grund einer Feder oder eines Federpaketes, oder hydraulisch wirkend auszubilden. Es besteht hierbei auch die Möglichkeit, verschiedene Antriebsvarianten zu kombinieren, so dass beispielsweise bei Verwendung eines mechanischen Spannantriebes 6 vermittelt über eine Feder oder ein Federpaket zum Entspannen der Feder eine Hydraulik eingesetzt wird.

## Patentansprüche

1. Spannvorrichtung für das mittelbare oder unmittelbare Spannen mindestens eines Gegenstandes, wie zum Beispiel eines Werkstückes oder eines Werkzeuges, wobei ein mit dem Gegenstand mittelbar oder unmittelbar verbundenes Spannmittel mit einem oder mehreren Spannelementen der Spannvorrichtung durch eine Spannbewegung zum lösbaren Festspannen des Gegenstandes zusammenwirkt und das zumindest eine Spannelement durch einen Spannantrieb entlang einer Spannrichtung bewegbar ist und zusätzlich das zumindest eine Spannelement in einer zur Spannrichtung verschiedenen, bevorzugt rechtwinkligen Ausgleichsrichtung beweglich ist, um in einem ersten Abschnitt der Spannbewegung vor dem eigentlichen Festspannen, ein Zentrieren des Gegenstandes beziehungsweise des Spannmittels relativ zur Spannvorrichtung beziehungsweise des zumindest einen Spannelementes in Richtung der Ausgleichsrichtung zu erlauben, **dadurch gekennzeichnet, dass** eine freie Beweglichkeit des zumindest einen Spannelementes (3) in Ausgleichsrichtung vorgesehen ist, insbesondere wobei das Spannelement (3) als Spannkugel (30) oder als Spannbacke ausgebildet ist und/oder die Spannvorrichtung (1) auch mehrere, jeweils unterschiedlich ausgebildete Spannelementarten aufweist und die verschiedenen Spannelementarten unterschiedlichen Zwecken dienen, zum Beispiel eine erste Spannelementart dem Zentrieren und eine zweite Spannelementart dem Spannen dient.

2. Spannvorrichtung nach Anspruch 1, **gekennzeichnet durch** eine nicht starre Kopplung oder Verbindung des zumindest einen Spannelementes (3) mit dem Spannantrieb (6).

3. Spannvorrichtung nach einem der vorhergehenden Ansprüche, **dadurch gekennzeichnet, dass** ein Festspannen des Gegenstandes durch die Spannvorrichtung (1) erst nach dem Zentrieren in einem zweiten Abschnitt der Spannbewegung erfolgt.

4. Spannvorrichtung nach einem der vorhergehenden Ansprüche, **dadurch gekennzeichnet, dass** das Spannmittel (2) mindestens eine Ausnehmung (21), Hinterschneidung, Einkerbung oder ähnliches für ein, insbesondere formschlüssiges Zusammenwirken mit dem zumindest einen Spannelement (3) aufweist.

5. Spannvorrichtung nach einem der vorhergehenden Ansprüche, **dadurch gekennzeichnet, dass** die Spannvorrichtung (1) eine Aufnahmeöffnung (5) für die Aufnahme des Spannmittels (2) aufweist und die Spannelemente (3) die Aufnahmeöffnung (5) ring- oder kranzartig umgeben und/oder die Spannvorrichtung (1) einen Einführdorn aufweist, an dessen Mantelfläche die Spannelemente (3) angeordnet sind und der Einführdorn in ein ringartig ausgestaltetes Spannmittel (2) eingreift.

6. Spannvorrichtung nach einem der vorhergehenden Ansprüche, **dadurch gekennzeichnet, dass** eine Verschlusskappe (7) die Aufnahmeöffnung (5) verschließt, und die gegen die Kraft einer Feder (70), insbesondere durch das Spannmittel (2), in die Aufnahmeöffnung (5) eindrückbar ist und so diese zur Aufnahme des Spannmittels (2) freigibt.

7. Spannvorrichtung nach einem der vorhergehenden Ansprüche, **dadurch gekennzeichnet, dass** das Spannmittel (2) als Spannbolzen (20) oder als Spannring ausgebildet ist.

8. Spannvorrichtung nach einem der vorhergehenden Ansprüche, **gekennzeichnet durch** einen elektromotorischen, elektromechanischen, pneumatischen, mechanisch (z.B. aufgrund einer Feder oder eines Federpaketes) oder hydraulisch wirkenden Spannantrieb (6).

9. Spannvorrichtung nach einem der vorhergehenden Ansprüche, **dadurch gekennzeichnet dass** der Spannantrieb (6) eine Zughülse (32) oder einen Zugbolzen umfasst, der von dem Spannantrieb (6) bewegt wird und die Zughülse (32) beziehungsweise der Zugbolzen auf das zumindest eine Spannelement (3) wirkt und diese/s bewegt.

10. Spannvorrichtung nach einem der vorhergehenden Ansprüche, **dadurch gekennzeichnet, dass** die Zughülse (32) oder Zugbolzen das zumindest eine Spannelement (3) käfigartig hält, wobei die Zughülse (32) oder der Zugbolzen in Spannrichtung (A) bewegbar ist und das zumindest eine Spannelement (3) eine Beweglichkeit in Ausgleichsrichtung (B) besitzt.

11. Spannvorrichtung nach einem der vorhergehenden Ansprüche, **dadurch gekennzeichnet, dass** ein Abstützelement (4) auf der der Aufnahmeöffnung (5) abgewandten Seite des zumindest eines Spannelementes (3) vorgesehen ist, wobei insbesondere das Abstützelement (4) die ring- oder kranzartig angeordneten Spannelemente (3) hülsenartig umgibt und das Spannelement (3) zumindest während eines Teils der Spannbewegung sich an diesem abstützt und das Abstützelement (4) eine Ausgestaltung aufweist, durch welche das Spannelement (3) bei seiner Bewegung in Spannrichtung (A) auch in Ausgleichsrichtung (B), auf das Spannmittel (2) zu, versetzt wird.

12. Spannvorrichtung nach einem der vorhergehenden Ansprüche, **gekennzeichnet durch** eine im Wesentlichen hülsenartige Ausgestaltung des Abstützelementes (4), wobei sich das zumindest eine Spannelement (3) auf der Hülseninnenfläche des Abstützelementes (4) abstützt, und in der Hülse (40) ein Absatz (41) oder Konus vorgesehen ist, **durch** welchen das zumindest eine Spannelement (3) bei seiner Bewegung in Spannrichtung (A) auch in Ausgleichsrichtung (B), auf das Spannmittel (2) zu, versetzt wird.

13. Spannvorrichtung nach einem der vorhergehenden Ansprüche, **dadurch gekennzeichnet, dass** im Bereich des Zusammenwirkens des zumindest eines Spannelementes (3) mit dem Spannmittel (2) keine Referenzfläche für die lagegenaue Positionierung des Gegenstandes relativ zur Spannvorrichtung vorgesehen ist.

14. Verfahren für das lösbare Festspannen eines Gegenstandes, zum Beispiel eines Werkstückes oder Werkzeuges mit einer Spannvorrichtung, insbesondere nach einem oder mehreren der vorhergehenden Ansprüche, wobei in einer Spannbewegung zumindest ein Spannelement der Spannvorrichtung derart durch einen Spannantrieb entlang einer Spannrichtung bewegt wird, dass das zumindest eine Spannelement mit einem, mit dem Gegenstand mittelbar oder unmittelbar verbundenen Spannmittel zusammenwirkt, **dadurch kennzeichnet, dass** in einem ersten Teil der Spannbewegung sich das zumindest eine Spannelement (3) in einer, zur Spannrichtung (A) verschiedenen, insbesondere rechtwinkligen Ausgleichsrichtung (B), für ein Zentrieren des Gegenstandes beziehungsweise des Spannmittels (2) relativ zur Spannvorrichtung (1) bewegt, und in einem dem ersten Teil der Spannbewegung nachfolgenden zweiten Teil das Spannmittel (2) durch das zumindest eine Spannelement (3), insbesondere durch eine Bewegung des zumindest einen Spannelementes (3) in Spannrichtung (A), festgespannt wird.

15. Verfahren nach Anspruch 14, **dadurch gekennzeichnet, dass** vor dem ersten Teil der Spannbewegung, das zumindest eine Spannelement (3) in Spannrichtung (A) bewegt wird.
